(19) Europäisches Patentamt

European Patent Office

Office européen des brevets

(11) Veröffentlichungsnummer: **0 137 184**
**B1**

(12) # EUROPÄISCHE PATENTSCHRIFT

(45) Veröffentlichungstag der Patentschrift:
25.11.87

(51) Int. Cl.⁴: **F 15 B 11/16**

(21) Anmeldenummer: 84109328.9

(22) Anmeldetag: 07.08.84

(54) Hydrauliksystem mit einer Pumpe mit unveränderlicher Fördermenge.

(30) Priorität: 11.08.83 US 524806

(43) Veröffentlichungstag der Anmeldung:
17.04.85 Patentblatt 85/16

(45) Bekanntmachung des Hinweises auf die Patenterteilung:
25.11.87 Patentblatt 87/48

(84) Benannte Vertragsstaaten:
AT BE CH DE FR GB IT LI NL SE

(56) Entgegenhaltungen:
EP-A-0 061 005
US-A-4 044 786
US-A-4 343 151

(73) Patentinhaber: DEERE & COMPANY, 1 John Deere
Road, Moline Illinois 61265 (US)

(72) Erfinder: Miller, James Anton, 1727 Four Winds
Dr., Cedar Falls Iowa 50613 (US)
Erfinder: Eagles, Derek Malcolm, 107 Rebecca
Road, Hudson Iowa 50643 (US)

(74) Vertreter: Feldmann, Bernhard, DEERE &
COMPANY European Office, Patent Department
Steubenstrasse 36- 42 Postfach 503, D-6800
Mannheim 1 (DE)

## Beschreibung

Die Erfindung bezieht sich auf ein Hydrauliksystem mit einer Pumpe mit unveränderlicher Fördermenge, die über ein Vorrangventil mit einem Primärkreis und mit einem Sekundärkreis in Verbindung steht, wobei der Primärkreis ein den Zufluß zu einem bevorrechtigten Verbraucher steuerndes Ventil aufweist, zwischen Vorrangventil und Ventil sowohl eine Zuführleitung als auch eine Signalleitung vorgesehen sind, das Vorrangventil in Abhängigkeit von dem Druck in der Signalleitung verstellbar ist und wobei Zuführleitung und Signalleitung bei aus seiner Neutralstellung verschobenem Ventil mit der Druckseite des bevorrechtigten Verbrauchers verbunden sind.

Bei derartigen Hydrauliksystemen dient der Primärkreis vorzugsweise zum Beaufschlagen einer hydrostatischen Lenkung, bei der sich das Ventil bei nichtbewegtem Lenkrad in seiner Neutralstellung befindet, in der der Zulauf zum bevorzugten Verbraucher unterbrochen ist. Befindet sich das Ventil aber in einer seiner Arbeitsstellungen, in der ein Beaufschlagen des Verbrauchers über die Pumpe erfolgt, so kann es vorkommen, daß im Falle der Lenkung die Räder beim Einschlagen auf ein Hindernis treffen und damit im Verbraucher ein; Gegenkraft auslösen, die größer ist als der Pumpendruck. Dadurch entsteht im Hydrauliksystem ein Rückfluß, der das Lenkrad für die Bedienungsperson ganz unerwwartet plötzlich zurückdreht. Wegen der damit verbundenen Gefahren ist dies natürlich unerwünscht.

Bei dem Hydrauliksystem von dem die Erfindung ausgeht und das als offenes System ausgebildet ist (US-A-4 044 786), ist das Vorrangventil als Dreiwege-Zweistellungsventil ausgebildet, über die Zuführleitung mit dem Ventil in dem Primärkreis verbunden und in der Neutralstellung des Ventils blockiert. Die Flüssigkeitsmenge wird dann über ein Überströmventil, das vor dem Vorrangventil vorgesehen ist abgesteuert. Gleichzeitig ist die Signalleitung mit einem Sammelbehälter verbunden. Über eine Pilotleitung, die an die Zuführleitung angeschlossen ist, kann sich aber an der der Signalleitung abgelegenen Seite des Vorrangventils ein Druck aufbauen, der das Vorrangventil entgegen der Wirkung einer Feder in eine Stellung verschiebt, in der die Pumpe mit dem Sekundärkreis in Verbindung steht. Das Steuerventil wird dann druckbeaufschlagt und in eine Endstellung verschoben, in der die Verbindung der Signalleitung zwischen dem Ventil des Primärkreises und einem zweiten Vorrangventil unterbrochen ist. Damit kann sich das zweite Vorrangventil in eine Stellung verschieben, in der eine zweite Pumpe den Sekundärkreis beaufschlagen kann in Fällen, in denen der Bedarf des Primärkreises gering ist. Ist der Bedarf des Primärkreises dagegen hoch, so wird über das zweite Vorrangventil die zweite Pumpe dem Primärkreis zugeschaltet. Sobald der Rückdruck den Pumpendruck überwindet, entstehen bei diesem Hydrauliksystem unter Druck stehende Rückflüsse. Hinzu kommt, daß bei diesem Hydrauliksystem zwei Pumpen und zwei Vorrangventile erforderlich sind.

Die mit der Erfindung zu lösende Aufgabe wird darin gesehen, bei den Pumpendruck übersteigenden Gegendrücken am Verbraucher einen Rückfluß zu vermeiden.

Diese Aufgabe ist gemäß der Erfindung dadurch gelöst worden, daß die Signalleitung blockierbar ist, sobald der in ihr herrschende Druck größer ist, als der über die Zuführleitung zum Verbraucher gelieferte Druck. Auf diese Weise wird, wenn das Ventil des Primärkreises beispielsweise durch ein Drehen des Lenkrades in eine Stellung verbracht wurde, in der die Pumpe mit dem bevorrechtigten Verbraucher über die Zuführleitung und die Signalleitung verbunden ist, die Signalleitung sofort blockiert, sobald an dem Verbraucher eine Kraft wirkt, die größer ist als der Pumpendruck. Damit wird ein eventuell auftretender Rückdruck sofort in der Signalleitung aufgefangen und kann keine schädlichen Wirkungen entfalten.

Im einzelnen ist nach der Erfindung für ein Hydrauliksystem mit einem Steuerventil in der Signalleitung vorgesehen, wobei das Hydrauliksystem als offenes System ausgebildet ist, daß das Steuerventil über den Druck in der Zuführleitung verstellbar ist und bei einem Druck in der Signalleitung, der größer ist als der Druck in der Zuführleitung, in eine erste Endstellung verstellbar ist, in der die Verbindung der Signalleitung zwischen Vorrangventil und dem Ventil unterbrochen ist.

Somit kann der Rückdruck durch ein zwischenzuschaltendes Steuerventil aufgefangen werden, das zusätzlich noch zum Beaufschlagen des Vorrangventils mit unterschiedlichen Drücken dient, wozu das Steuerventil erfindungsgemäß in seiner ersten Endstellung die Zuführleitung mit dem Abschnitt der Signalleitung verbinden kann, der zwischen Steuerventil und Vorrangventil liegt, so daß am Vorrangventil dann der Druck aus der Zuführleitung, allerdings gedrosselt, anliegt.

Ist das Ventil im Primärkreis mit einer Rücklaufleitung versehen, das Vorrangventil an seiner der Signalleitung abgelegenen Seite über eine Pilotleitung mit der Zuführleitung verbunden und verbindet eine weitere Leitung das Vorrangventil mit dem Sekundärkreis, so kann nach einem weiteren Vorschlag der Erfindung der Sekundärkreis ein Stellventil aufweisen, das in seiner Neutralstellung die weitere Leitung über eine vierte Leitung mit der Rücklaufleitung verbindet. Hierdurch wird erreicht, daß in der Neutralstellung des Ventils im Primärkreis, in der das Steuerventil bei arbeitender Pumpe die Zuführleitung mit dem Abschnitt der Signalleitung zwischen Steuerventil und Vorrangventil verbindet, das Vorrangventil in eine Stellung verstellt wird, in der die Pumpe mit der weiteren Leitung verbunden ist, so daß auf zusätzliche Überströmventile verzichtet werden kann.

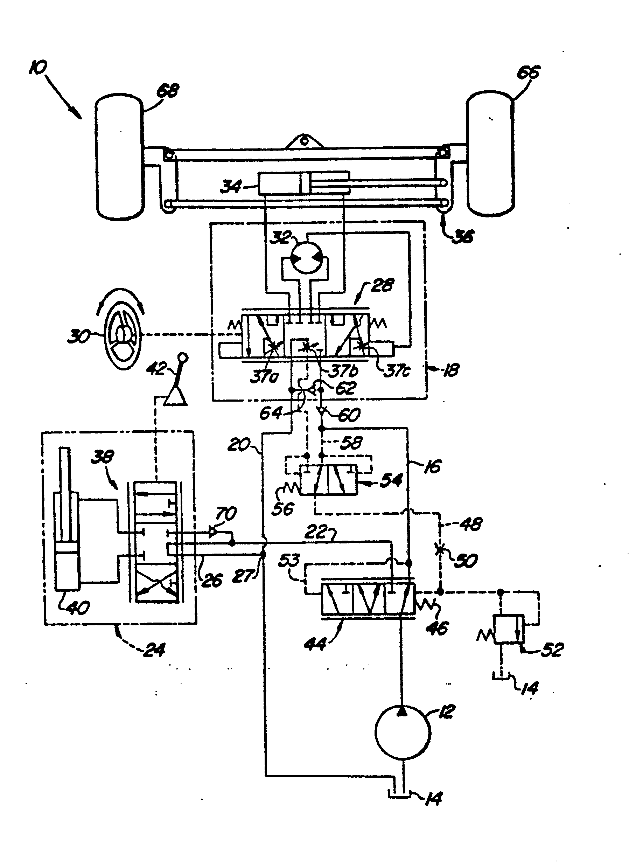

In der Zeichnung ist ein nachfolgend näher erläutertes offenes Hydrauliksystem mit Lastfühler dargestellt.

Dieses Hydrauliksystem ist in seiner Gesamtheit mit 10 bezeichnet und dient primär zum Steuern der Lenkung eines Kraft- oder Arbeitsfahrzeuges, insbesondere eines Ackerschleppers oder einer Baumaschine. Natürlich ist der Einsatz nicht auf die Steuerung der Lenkung begrenzt, da auch andere Aggregate anstelle der Lenkung Verwendung finden können. Nur werden diese Aggregate immer bevorzugt mit Druckflüssigkeit versorgt. Im einzelnen weist das Hydrauliksytem eine Pumpe 12 mit unveränderlicher Fördermenge auf, die Flüssigkeit aus einem Sammelbehälter 14 ansaugt und unter Druck stehende Flüssigkeit über eine 1. Leitung 16 an einem bevorzugten Arbeitskreis 18 abgeben kann. Drucklose oder Rücklaufflüssigkeit gelangt über eine 2. Leitung 20 zurück zum Sammelbehälter 14. Die Pumpe 12 kann ferner noch über eine 3. Leitung 22 einen Sekundärkreis 24 versorgen, der über eine 4. Leitung 26, die an der Verbindungsstelle 27 in die 2. Leitung 20 mündet, mit dem Sammelbehälter 14 in Verbindung steht.

Der bevorzugte Arbeitskreis 18 genießt immer Priorität, das heißt, sein Verbraucher wird bei Bedarf immer bevorzugt mit unter Druck stehender Flüssigkeit versorgt, damit seine Funktion auch bei druckbeaufschlagtem Verbraucher im Sekundärkreis stets gewährleistet ist. Im dargestellten Ausführungsbeispiel ist der Arbeitskreis 18 mit einem Steuerventil 28 versehen, das über ein von Hand betätigbares Lenkrad 30 und einen durch Flüssigkeit aktivierten Drehkörper 32 oder dergleichen verstellbar ist und das Druckflüssigkeit den beiden Enden eines Hydraulikzylinders 34 zuführen kann, der dann ein Lenkgestänge 36 entsprechend verstellt. In der Zeichnung sind die Verbindungsleitungen zwischen Steuerventil 28, Hydraulikzylinder 34 und Drehkörper 32 sowie die Verbindung zwischen Hydraulikzylinder und Lenkgestänge schematisch dargestellt. Die Funktion entspricht der üblichen. Zu erwähnen bleibt lediglich, daß das als Dreistellungsventil ausgebildete Steuerventil 28 mit drei vorzugsweise verstellbaren Blenden 37 a, b und c versehen ist, die zum Dosieren des Flüssigkeitsdurchflusses dienen.

In dem Sekundärkreis 24 ist ein Stellventil 38 vorgesehen, das über Leitungen mit den beiden Enden eines weiteren Hydraulikzylinders 40 verbunden ist. Dieser kann vielen Anwendungen dienen. Eine davon wäre das Anheben und Absenken eines an das Fahrzeug anbaubaren Gerätes. Vorzugsweise ist das Stellventil 38 über einen Hebelmechanismus 42 verstellbar. Es kann aus einer Neutralstellung in jeweils zwei Endstellungen verstellt werden, in denen dann jeweils ein Ende des weiteren Hydraulikzylinders 40 mit der Pumpe 12 und das andere Ende mit dem Sammelbehälter verbunden sein kann.

Ein Vorrangventil 44 ist in der 1. Leitung 16 vorgesehen und verstellbar, um den Druck stromabwärts von ihm in der 1. Leitung 16 zu regulieren. Vorzugsweise kann es als Dreiwege-Dreistellungsventil ausgebildet sein. Über eine Feder 46 wird es normalerweise in seiner ersten in der Zeichnung dargestellten Stellung gehalten. In dieser Stellung wird alle von der Pumpe 12 gelieferte Flüssigkeit durch die 1. Leitung 16 zu dem Arbeitskreis 18 gerichtet. In einer zweiten oder Mittenstellung, in die das Vorrangventil 44 über einen Flüssigkeitsdruck verstellbar ist, können die 1. Leitung 16 und die 3. Leitung 22, die mit dem Vorrangventil 44 anderenends verbunden ist, mit Druckflüssigkeit gespeist werden, so daß diese dem Arbeitskreis 18 und dem Sekundärkreis 24 zugeführt wird. In seiner dritten Stellung besteht nur noch eine Verbindung von der Pumpe 12 zu der 3. Leitung 22, so daß alle Flüssigkeit von der Pumpe zu dem Sekundärkreis 24 geleitet wird. Die Verstellung des Vorrangventils 44 erfolgt teilweise durch Druckimpulse oder -signale, die von der Last an dem Hydraulikzylinder 34 ausgehen oder abgegeben und durch eine Signalleitung 48 geleitet werden. Letztere ist einenends mit Bezug auf die Zeichnung an die rechte Seite des Vorrangventils 44 und anderenends an das Steuerventil 28 angeschlossen, so daß der in ihr herrschende Druck zusammen mit der Kraft der Feder 46 bestrebt ist, das Vorrangventil 44 in seine erste Stellung zu schieben oder es in dieser zu halten. Hierdurch ist gewährleistet, daß für den bevorzugten Arbeitskreis 18 immer ein ausreichender Druck- und Flüssigkeitsstrom, wie nachfolgend noch erläutert wird, vorhanden ist.

In der Signalleitung 48 sind eine Blende 50 zum Dosieren der Flüssigkeit und ein Überströmventil 52 vorgesehen. Letzteres ist zu dem Vorrangventil 44 parallel geschaltet, wird durch eine Feder in seiner geschlossenen Stellung gehalten und kann über den Flüssigkeitsdruck stromabwärts der Blende 50 in eine Offenstellung gebracht werden, in der dann Flüssigkeit in den Sammelbehälter 14 gelangen kann. Damit öffnet das Überströmventil nur in Abhängigkeit von einem vorgegebenen Wert und die überströmende Flüssigkeit kann wieder verwendet werden. Gleichfalls ist in dem Hydrauliksystem 10 noch eine Pilotleitung 53 vorgesehen, die die 1. Leitung 16 stromabwärts des Vorrangventils 44 mit dem linken Ende des Vorrangventils 44 verbindet. Damit wird bei in der Leitung 16 ansteigendem Druck ein Druckimpuls oder -signal auf das linke Ende des Vorrangventils 44 übertragen, der oder das der Kraft der Feder 46 und dem Druck in der Signalleitung 48 entgegenwirkt. Sobald dieser Druckimpuls größer ist als die Kraft der Feder 46 und der Druck in der Signalleitung 48, wird sich das Vorrangventil 44 aus seiner ersten in der Zeichnung wiedergegebenen Stellung nach rechts in seine zweite und gegebenenfalls in seine dritte Stellung verschieben.

Bei derartigen bevorzugten Arbeitskreisen für eine Lenkung kann, wenn ein Rückdruck, der größer ist als der Pumpendruck am Hydraulikzylinder und ein Rückfluß durch den Drehkörper 32 in Kombination auftreten, es vorkommen, daß eine Drehkraft erzeugt wird, die das Lenkrad 30 ruckartig in einem Drehsinn dreht, der dem von der Bedienungsperson gewählten entgegengesetzt ist. Dadurch muß die Lenkstellung wieder berichtigt werden. Beides ist unerwünscht. Dies wird im vorliegenden Fall unter anderem durch ein Signalsteuerventil 54 vermieden, das in der Signalleitung 48 zwischen dem Arbeitskreis 18 und der Blende 50 vorgesehen ist. Es ist als Dreiwege-Zweistellungsventil ausgebildet und kann durch die Kraft einer Feder 56 und den Druck in der Signalleitung 48, deren Leitungsstück zwischen Steuerventil 28 und Signalsteuerventil 54 hierzu über einen Abzweig mit der linken Seite des Signalsteuerventils 54 verbunden ist, in einer ersten in der Zeichnung gezeigten Stellung gehalten werden, in der die Leitung 16 mit dem Leitungsstück der Signalleitung 48 zwischen dem Signalsteuerventil 54 und der Blende 50 verbunden ist. Die Leitung 16 ist hierzu über eine Zwischenleitung 58 an das Signalsteuerventil 54 angeschlossen. Von der Zwischenleitung 58 führt noch ein weiterer Abzweig zu der rechten Seite des Signalsteuerventils 54, so daß dieses über den in der Leitung 16 zwischen dem Vorrangventil 44 und dem Steuerventil 28 herrschenden Druck in eine zweite Stellung verschoben werden kann, in der das Steuerventil 28 mit der rechten Seite des Vorrangventils 44 und mit dem Überströmventil 52 verbunden ist.

Das Signalsteuerventil 54 kann auf Druckänderungen der Flüssigkeit in der 1. Leitung 16 und in der Signalleitung 48 ansprechen und kann aufgrund solcher Druckänderungen einen Flüssigkeitsrückfluß aus dem 1. Arbeitskreis 18 verhindern, wenn der Flüssigkeitsdruck in der 1. Leitung 16 geringer ist als der Flüssigkeitsdruck in der Signalleitung 48, oder wenn eine äußere Stellkraft auf den Hydraulikzylinder 34 einwirkt, die größer ist als der dort herrschende Flüssigkeitsdruck. Dadurch, daß ein Flüssigkeitsfluß aus dem Steuerventil 28 verhindert wird, eliminiert man diesen Flüssigkeitsweg für Rückflüssigkeitsfluß durch den Drehkörper 32. In dem Hydrauliksystem 10 ist ferner noch ein Rückschlagventil 60 vorgesehen, das in dem Leitungsstück der 1. Leitung 16 angeordnet ist, das das Steuerventil 28 mit der Anschlußstelle der Zwischenleitung 58 verbindet. Dieses Rückschlagventil 60 ist so angeordnet, daß es einen Rückfluß der Flüssigkeit aus dem Steuerventil 28 bzw. dem 1. Arbeitskreis durch die 1. Leitung verhindert. Damit wirken das Signalsteuerventil 54 und das Rückschlagventil 60 zusammen, um das selbsttätige Zurückdrehen des Lenkrades und die Berichtigung der Lenkstellung am Lenkrad 30 zu vermeiden.

Ein weiteres Rückschlagventil 62 ist in einer Leitung 64 vorgesehen, die die 1. Leitung 16 mit der zweiten Leitung 20 verbindet. Das Rückschlagventil 62 ist dabei so angeordnet, daß es einen Flüssigkeitsfluß von der 2. Leitung zu der 1. Leitung erlaubt, sofern aufgrund der Drehung am Lenkrad 30 ein größerer Flüssigkeitsbedarf erforderlich wird, als er von der Pumpe 12 geliefert werden kann. Sollte dies auftreten, beispielsweise, wenn der Motor bei abgeschlepptem Fahrzeug stillsteht, so wird Flüssigkeit, die normalerweise in den Sammelbehälter zurückströmt, dazu verwendet, die 1. Leitung aufzufüllen, so daß in der 1. Leitung keine Kavitation auftritt.

Rechte und linke Räder sind mit 66 und 68 bezeichnet und mit dem Lenkgestänge 36 verbunden. Schließlich ist dem Sekundärkreis 24 noch ein Rückschlagventil 70 zugeordnet, das in einer Zuführleitung zu dem Sekundärkreis vorgesehen ist und verhindert, daß in dieser Flüssigkeit zurückströmt.

### Arbeitsweise

In der nachfolgenden Erläuterung des Hydrauliksystems 10 werden Drücke angegeben, bei denen die verschiedenen Ventile ansprechen. Diese Werte sind rein hypothetisch, und die Erfindung soll durch diese Werte nicht eingeengt werden.

Bei nicht laufendem Motor des Kraftfahrzeuges wird die Pumpe 12 nicht angetrieben. Das Steuerventil 28 befindet sich dabei in seiner in der Zeichnung wiedergegebenen Neutralstellung, der Hydraulikzylinder 34 ist nicht druckbeaufschlagt, und das Vorrangventil 44 und das Signalventil 54 befinden sich in ihren ersten Stellungen, die in der Zeichnung dargestellt sind. Sobald nun der Motor angelassen wird, wird die Pumpe 12 angetrieben und über die Leitung 16 zunächst unter geringem Druck stehende Flüssigkeit zu dem Steuerventil 28 fördern. Befindet sich dieses dann aber noch in seiner Neutralstellung, so wird der Flüssigkeitsfluß hier blockiert. Gleichzeitig werden die rechte und linke Seite des Vorrangventils 44 und die rechte Seite des Signalsteuerventils 54 mit diesem Druck beaufschlagt, der aber noch nicht groß genug ist, um das Vorrangventil 44 und das Signalsteuerventil 54 aus ihren in der Zeichnung wiedergegebenen ersten Stellungen zu verschieben. Unterstellt man, daß zum Zusammenschieben der Feder 56 am Signalsteuerventil ein Druck von 50 psi (3,5 bar) erforderlich ist, so wird sich das Signalsteuerventil 54 in seine zweite Stellung verschieben, wenn der Druck in der Leitung 16 auf über 50 psi ansteigt. Dieser Druck reicht aber noch nicht aus, um die Kraft der Feder 46 am Vorrangventil 44 zu überwinden, so daß dieses dann noch in seiner ersten Stellung verbleibt. Da die Pumpe 12 konstant fördert und das Steuerventil 28 den Flüssigkeitsfluß blockiert, steigt der Druck im Hydrauliksystem weiter an. Erreicht nun der Druck im Hydrauliksystem 10 einen Wert, der etwas über 50 psi liegt, so verschiebt sich das Signalsteuerventil 54 in seine zweite Stellung und unterbricht dabei die Verbindung zwischen der Zwischenleitung 58 und dem Leitungsstück der Signalleitung 48 zwischen dem Signalsteuerventil 54 und der Blende 50 und verbindet stattdessen dieses Leitungsstück mit dem Leitungsstück zwischen dem Signalventil 54 und dem Steuerventil 28, so daß der Druck in der Signalleitung 48 sich abbaut, da nunmehr über die Blende 37 b eine Verbindung mit der 2. Leitung 20 geschaffen ist, die zum Sammelbehälter 14 führt. Bei diesen Bedingungen befindet sich das Vorrangventil 44 immer noch in seiner ersten Stellung, da zum Überwinden der Kraft der Feder 46 ein Druck von etwa 150 psi (10,5 bar) erforderlich ist. Steigt nun der Druck auf einen Wert von etwas über 150 psi an, so wird der am linken Ende des Vorrangventils 44 über die Pilotleitung 53 sich aufbauende Druck die Kraft der Feder 46 überwinden und das Vorrangventil 44 in seine zweite oder Mittenstellung verschieben, in der dann die Pumpe 12 sowohl mit der Leitung 16 als auch mit der 3. Leitung 22 verbunden ist. Befindet sich aber jetzt das Stellventil 38 noch in seiner gezeigten Neutralstellung, so kann kein Druck zu dem Hydraulikzylinder 40 von der Pumpe 12 gelangen. Über die 4. Leitung 26 wird stattdessen der Flüssigkeitsstrom in der Leitung 22 zu der mit dem Sammelbehälter 14 verbundenen Leitung 20 geführt. Das offene Hydrauliksystem 10 befindet sich jetzt in Bereitschaftsstellung und die Pumpe 12 arbeitet im wesentlichen nur noch gegen den Druck der Feder 46.

Lenkbetätigung bei normalen Bedingungen

Unterstellt man ferner, daß sich das Stellventil 38 noch in seiner Neutralstellung befindet, am bevorzugten Arbeitskreis 18 infolge Betätigung des Lenkrads 30 aber ein Flüssigkeitsbedarf entsteht, wobei in der Bereitschaftsstellung Flüssigkeit sowohl zum Steuerventil 28 als auch zum Stellventil 38 geleitet wird, das Signalsteuerventil 54 sich aber noch in seiner zweiten Stellung befindet, so wird sich das Steuerventil 28 aus seiner Neutralstellung in eine seiner Endstellungen verschieben, je nachdem, ob eine Rechts- oder eine Linkskurve zu durchfahren ist. Für eine Rechtskurve - also einem Radeinschlag nach rechts - wird das Lenkrad 30 im Uhrzeigerdrehsinn gedreht, und das Steuerventil 28 wird sich nach rechts in seine linke Endstellung verschieben. Dadurch wird die 1. Leitung 16 über die Blende 37 a im Steuerventil 28 mit der linken Seite des Drehkörpers 32 und mit der Signalleitung 48 verbunden, die dann nicht mehr mit der 2. Leitung 20 in Verbindung steht. Wird die linke Seite des Drehkörpers mit der Leitung 16 verbunden, so wird seine rechte Seite über das Steuerventil 28 mit dem kolbenseitigen Ende des Hydraulikzylinders 34 verbunden und diese Seite druckbeaufschlagen. Das zylinderseitige Ende des Hydraulikzylinders ist dann mit der 2. Leitung 20 und somit mit dem Sammelbehälter 14 verbunden. Die Blenden 37 a und 37 c sind in den Zuflußkanälen zu dem Drehkörper 32 vorgesehen, wobei hinter den Blenden oder stromabwärts zu diesen Verbindungskanäle in die Zuflußkanäle münden, die anderenends zur Pumpenseite offen sind. Geht man davon aus, daß zum Verstellen des Hydraulikzylinders 34 und damit der Räder 66 und 68 ein Druck von 900 psi (63 bar) erforderlich ist, so muß sich zunächst der Druck der Pumpe 12 vom Bereitschaftsdruck auf 900 psi erhöhen, damit eine Lenkwirkung eintritt. Solange der Druck den Wert von 900 psi nicht erreicht, tritt keine Verstellung des Kolbens im Hydraulikzylinder 34 ein, und die Druckflüssigkeit strömt über die Blende 37 a und die Signalleitung 48 zum Überströmventil 52 und gleichzeitig zum linken Ende des Signalsteuerventils 54. Der sich dort aufbauende Druck wird infolge der Blende 37 a geringer sein als an der rechten Seite des Signalsteuerventils, aber aufgrund der Feder 56 das Signalsteuerventil 54 in seine erste dargestellte Stellung zurückstellen, in der dann der Durchfluß im Signalsteuerventil 54 von dem Steuerventil 28 zur Blende 50 unterbrochen und eine Verbindung der Zwischenleitung 58 mit dem Leitungsstück zwischen Signalsteuerventil 54 und Blende 50 hergestellt ist. Dadurch kann sich am rechten Ende des Vorrangventils 44 wieder ein Druck aufbauen, der zusammen mit der Kraft der Feder 46 beginnt, das Vorrangventil 44 wieder in seine erste gezeigte Stellung nach links gegen den Druck in der Pilotleitung zurückzuschieben. Der Zufluß zu der 3. Leitung 22 wird dabei gedrosselt, der Druck in der 1. Leitung 16 steigt weiter an bis er die 900 psi erreicht, wobei sich das Vorrangventil 44 ganz in seine erste Stellung verstellt. Damit kann der Druck im Hydrauliksystem 10 bzw. in der Leitung 16 weiter ansteigen, wobei das Vorrangventil 44 in seiner Stellung verbleibt, solange das Signalsteuerventil 54 in seiner ersten Stellung sich befindet, da dem am linken Ende des Vorrangventils 44 herrschenden Systemdruck der Systemdruck am rechten Ende des Vorrangventils zuzüglich der Kraft der Feder 46 jedoch abzüglich der Drosselverluste an der Blende 50 entgegenwirkt. Die Summe der Kräfte am rechten Ende des Vorrangventils 44 ist dabei größer als der Systemdruck. Sobald der Druck in der Leitung auf einen Wert von etwa 950 psi (66,5 bar) ansteigt, wird das Signalsteuerventil 54 wieder in seine zweite Stellung verschoben, da dann die Verluste an der Drossel 37 a etwa 50 psi betragen, so daß am linken Ende des Signalsteuerventils 54 dann ein Druck von 900 psi herrscht, der zusammen mit der Kraft der Feder 56 nicht ausreicht, das Signalsteuerventil 54 in seiner ersten Stellung zu halten. Der Druck in der Leitung 16 wird weiter ansteigen auf etwa 1050 psi (73,5 bar) und entspricht dann in etwa 900 psi, die von der Lenkung durch die Signalleitung 48 kommend zuzüglich 150 psi, die die Kraft der Feder 46 repräsentieren, an der rechten Seite des Vorrangventils 44 anliegen. Solange, wie die Bedienungsperson das Lenkrad 30 im Uhrzeigerdrehsinn weiterdreht, werden diese Bedingungen aufrechterhalten.

Sobald mit dem Drehen des Lenkrades 30 aufgehört wird, verschiebt sich das Steuerventil 28 wieder in seine Neutralstellung, in der die Signalleitung 48 über die Blende 37 a mit der 2. Leitung 20 verbunden ist, so daß die Flüssigkeit, die am rechten Ende des Vorrangventils 44 ansteht, wieder zurück in den Sammelbehälter 14 gelangt. Der Druck in der Signalleitung 48 fällt dabei auf etwa 0 ab. Sobald der Druck in der Signalleitung abfällt, wird der an der linken Seite des Vorrangventils 44 anstehende Druck das Vorrangventil 44 nach rechts in seine zweite oder Mittenstellung verschieben, da in der Leitung 16 nach wie vor Druck herrscht und die Leitung 16 über die Pilotleitung 53 an die linke Seite des Vorrangventils angeschlossen ist. Gleichzeitig wird der Druck in der Leitung 16 das Signalsteuerventil 54 in seine zweite Stellung gegen die Kraft der Feder 56 zurückführen. Bei dem Zurückstellen des Vorrangventils 44 wird die Drosselung zwischen der Pumpe 12 und der 3. Leitung 22 reduziert, so daß im Ganzen gesehen das System sich wieder in Bereitschaftsstellung befindet.

Lenkung nach Inbetriebnahme des Sekundärkreises bei einem Druck, der höher ist als für die Lenkung benötigt

Es wird unterstellt, daß für die Beaufschlagung des Hydraulikzylinders 40 in dem Sekundärkreis 24 ein Druck von etwa 2000 psi (140 bar) benötigt wird. Befindet sich das Hydrauliksystem noch in seiner Bereitschaftsstellung, in der aufgrund der Feder 46 ein Druck von etwa 150 psi herrscht, und wird der Hebelmechanismus 42 derart betätigt, daß die Leitung 22 mit dem Hydraulikzylinder 40 verbunden ist, wozu beispielsweise das Stellventil 38 nach unten verschoben wurde, dann ist die Leitung 22 nicht mehr über die 4. Leitung 26 mit der Leitung 20 verbunden. Dadurch ist der Rückfluß aus der Leitung 22 unterbrochen und der Druck im Hydrauliksystem kann ansteigen. Dabei wird auch der an der linken Seite des Vorrangventils 44 anstehende Druck sich erhöhen, da auch in der Leitung 16 der Druck ansteigt, und das Vorrangventil 44 weiter nach rechts in seine dritte Stellung verschoben, in der dann nur noch eine Verbindung von der Pumpe 12 zur Leitung 22 besteht, so daß das gesamte Fördervolumen der Pumpe 12 dem Hydraulikzylinder 40 zugeführt wird. Die Leitung 16 ist dann von der Pumpe 12 getrennt und der in der Leitung 16 herrschende Druck bleibt aufrechterhalten. Der in der Leitung 16 herrschende Druck beträgt über 150 psi und der Druck am Hydraulikzylinder 40 wird auf etwa 2000 psi ansteigen, bevor sein Kolben bewegt werden kann. Die nicht druckbeaufschlagte Seite des Hydraulikzylinders 40 ist über das Stellventil 38, die 3. Leitung 26 und die 2. Leitung 20 mit dem Sammelbehälter 14 verbunden. Wird unter diesen Voraussetzungen eine Lenkbewegung beispielsweise nach rechts erforderlich, so wird durch Drehen des Lenkrades 30 im Uhrzeigerdrehsinn das Steuerventil 28 nach rechts in seine linke Endstellung verschoben, in der wieder über das Steuerventil 28 eine Verbindung der Leitung 16 mit der Leitung 48 hergestellt ist. Gleichzeitig ist die Leitung 16 über den Drehkörper 32 mit dem kolbenseitigen Ende des Hydraulikzylinders 34 verbunden, wobei die Verbindung sowohl zur Leitung 48 als auch zum Arbeitszylinder über die Blende 37 a in dem Steuerventil 28 erfolgt. Da aber der Druck in der Leitung 16 noch nicht ausreicht, um den Kolben im Hydraulikzylinder 34 zu verstellen, wird zunächst wieder der Druck am linken Ende des Signalsteuerventils 54 ansteigen, der dann zusammen mit der Kraft der Feder 56 so groß wird, daß das Signalsteuerventil 54 wieder in seine erste in der Zeichnung dargestellte Stellung zurückverstellt wird. In dieser Stellung ist dann die rechte Seite des Vorrangventils 44 wieder mit der Leitung 16 verbunden, so daß an dieser Seite der Druck aus der Leitung 16 minus der Drosselverluste an der Blende 50 und zuzüglich der Kraft der Feder 46 (150 psi) ansteht. Da an der linken Seite des Vorrangventils 44 nur der Druck aus der Leitung 16 über die Pilotleitung 53 anliegt, wird sich das Vorrangventil aus seiner 3. oder rechten Endstellung wieder nach links, gegebenenfalls bis in die gezeigte Endstellung verschieben. Dadurch kann der Druck in der Leitung 16 weiter ansteigen, während der Druck in der Leitung 22 im wesentlichen bei 2000 psi verbleibt. Nachdem der Druck auf 900 psi in der Leitung 16 angestiegen ist, dieser Wert entspricht dem Druck, der zum Verstellen des Kolbens im Hydraulikzylinder 34 erforderlich ist, und weiter auf 950 psi ansteigt, ird sich das Signalsteuerventil 54 wieder in seine zweite Stellung zurückverstellen. Damit wird der Druck an der rechten Seite des Vorrangventils 44 um die Drosselverluste an der Blende 37 a vermindert, so daß das Vorrangventil 44 wieder in seine Mittenstellung zurückgeht, was etwa bei einem Druck von 1050 psi erfolgt. Dieser Druck wird in der Leitung 16 solange aufrechterhalten, wie das Lenkrad 30 noch gedreht wird, wobei in der Leitung 22, die jetzt wieder mit der Pumpe 12 verbunden ist, ein Druck von 2000 psi herrscht.

Sobald die Drehbewegung am Lenkrad 30 beendet ist, wird das Steuerventil 28 in seine Neutralstellung zurückgeführt, so daß die Leitung 48 mit der Leitung 20 über die Blende 37 a verbunden und eine Verbindung mit dem Sammelbehälter 14 hergestellt ist. Dadurch fällt der Druck an der rechten Seite des Vorrangventils 44 ab, bis schließlich nur noch auf diese Seite die Kraft der Feder 46 wirkt. Der Druck in der Leitung 16, der über die Pilotleitung 53 an der linken Seite des Vorrangventils 44 anliegt, ist dann groß genug, um das Vorrangventil 44 gegen die Kraft der Feder 46 wieder in seine 3. Stellung zu verschieben, in der die Pumpe 12 nur noch zu dem Sekundärkreis 24 über die Leitung 22 fördert. Damit stehen an dem Hydraulikzylinder 40 nach wie vor 2000 psi an, während der Druck in der nunmehr von der Pumpe 12 getrennten Leitung 16 über oder etwa 150 psi beträgt.

**Lenkung, wenn eine äußere Kraft auf beide oder eines der Räder einwirkt**

Beim Fahren in einer Rinne oder dergleichen kann es vorkommen, daß beim Lenkeinschlag auf mindestens eins der Räder eine äußere Kraft dadurch einwirkt, daß das Rad gegen die Rinnenwand schlägt. Diese Kraft kann dann der Lenkbewegung entgegengesetzt sein und den Hydraulikzylinder 34 bzw. seinen Kolben gegen den Pumpendruck verstellen. Wären nach der Erfindung keine besonderen Vorkehrungen hiergegen getroffen, so würde sich der Kolben dann in eine dem Pumpendruck entgegengesetzte Richtung bewegen, d.h. die unter Druck stehende Flüssigkeit würde entgegengesetzt bewegt und dadurch den Drehkörper 32 in entgegengesetzter Richtung und damit auch das an diesem angreifende Lenkrad 30 bewegen. Dadurch entsteht die bereits vorerwähnte Lenkradrückdrehung, die plötzlich und in der Regel unerwartet auftritt und damit die Bedienungsperson überrascht. Je nach den auftretenden Kräften, kann die Bedienungsperson diese Lenkradrückdrehung nicht verhindern, auch wenn sie das Lenkrad 30 mit aller Kraft festhält. Die dadurch entstehenden Gefahren sind offensichtlich.

Bei der erfindungsgemäßen Ausführungsform wird diese Lenkradrückdrehung vermieden. Bei einer Drehung des Lenkrades 30 im Uhrzeigerdrehsinn für eine Fahrtrichtungsänderung nach rechts ist die Leitung 16, wie es vorstehend bereits mehrfach ausgeführt wurde, über die Blende 37 a im Steuerventil 28 mit dem Drehkörper 32 und dem Hydraulikzylinder 34 verbunden, so daß dessen kolbenseitiges Ende mit unter Druck stehender Flüssigkeit beaufschlagt wird, während sein zylinderseitiges Ende über das Steuerventil 28 mit der Leitung 20 und damit mit dem Sammelbehälter verbunden ist. Trifft nun eines der Räder 66 oder 68 auf ein Hindernis auf, das eine Gegenkraft erzeugt und das einschlagende Rad und damit den Kolben im Hydraulikzylinder 34 zurückstellen will, so entsteht im Drehkörper und in der Leitung 16 sowie in der Signalleitung 48 ein Rückdruck. In der Leitung 16 wird dieser Rückdruck durch das Rückschlagventil 60 aufgefangen. In der Signalleitung 48 bewirkt der Rückdruck ein sofortiges Verschieben des Signalsteuerventils 54 in seine erste und gezeigte Position, so daß die Verbindung mit der rechten Seite des Vorrangventils 44 hier unterbrochen wird. Die rechte Seite ist dann wieder an die Zwischenleitung 58 angeschlossen. Das sofortige Verstellen des Signalsteuerventils 54 wird dadurch bewirkt, daß der Rückdruck infolge der besonderen Anordnung der Blende 37 a in die Signalleitung ungedrosselt eintritt. Da das Rückschlagventil 60 stromabwärts der Zwischenleitung 58 vorgesehen ist, kann sich der Rückdruck nicht bis zum rechten Ende des Signalsteuerventils 54 fortpflanzen, so daß an der linken Seite des Signalsteuerventils eine Druckerhöhung auftritt, die zusammen mit der Kraft der Feder 56 das Signalsteuerventil 54 in seine erste Stellung verstellt und damit die Signalleitung 48 unterbricht. Damit ist ein Flüssigkeitsrückfluß unterbunden, der unter Umständen den Drehhkörper 32 hätte zurückdrehen können. Somit verbleibt der Drehkörper trotz einer auf eines der Räder einwirkenden Kraft in seiner jeweiligen Stellung und eine Lenkradrückdrehung ist ausgeschlossen.

Auch wenn das Rückschlagventil 60 nicht oder an anderer Stelle vorgesehen wäre, würden bei einem Rückdruck in der Leitung 16 und in der Signalleitung unterschiedliche Drücke herrschen, da der Rückdruck in der Leitung 16 noch durch die Blende 37 a gedrosselt wird, in der Signalleitung 48 jedoch nicht.

Sobald der Rückdruck nicht mehr existent ist, wird eine Funktion, wie sie unter "Lenkbetätigung bei normalen Bedingungen" beschrieben wurde, eintreten.

Bei Lenkeinschlägen nach links treten die vorbeschriebenen Bedinungen analog ein.

**Patentansprüche**

1. Hydrauliksystem (10) mit einer Pumpe (12) mit unveränderlicher Fördermenge, die über ein Vorrangventil (44) mit einem Primärkreis (18) und mit einem Sekundärkreis (24) in Verbindung steht, wobei der Primärkreis (18) ein den Zufluß zu einem bevorrechtigten Verbraucher (34) steuerndes Ventil (28) aufweist, zwischen Vorrangventil (44) und Ventil (28) sowohl eine Zuführleitung (16) als auch eine Signalleitung (48) vorgesehen sind, das Vorrangventil (44) in Abhängigkeit von dem Druck in der Signalleitung (48) verstellbar ist und wobei Zuführleitung (16) und Signalleitung (48) bei aus seiner Neutralstellung verschobenem Ventil (28) mit der Druckseite des bevorrechtigten Verbrauchers (34) verbunden sind, dadurch gekennzeichnet, daß die Signalleitung (48) blockierbar ist, sobald der in ihr herrschende Druck größer ist, als der über die Zuführleitung (16) zum Verbraucher (34) gelieferte Druck.

2. Hydrauliksystem nach Anspruch 1 mit einem Steuerventil (54) in der Signalleitung (48), wobei das Hydrauliksystem als offenes System ausgebildet ist, dadurch gekennzeichnet, daß das Steuerventil (54) über den Druck in der Zuführleitung (16) verstellbar ist und bei einem Druck in der Signalleitung (48), der größer ist als der Druck in der Zuführleitung, in eine erste Endstellung verstellbar ist, in der die Verbindung der Signalleitung (48) zwischen Vorrangventil (44) und dem Ventil (28) unterbrochen ist.

3. Hydrauliksystem (10) nach Anspruch 2, wobei in der Zuführleitung (16) ein Rückschlagventil (60) vorgesehen ist, dadurch gekennzeichnet, daß das Steuerventil (54) in seiner ersten Endstellung den Abschnitter der Zuführleitung (16) zwischen Rückschlagventil (60) und Vorrangventil (44) mit dem Abschnitt der Signalleitung (48) zwischen Steuerventil (54) und Vorrangventil (44) verbindet.

4. Hydrauliksystem nach einem oder mehreren der vorherigen Ansprüche, wobei das Ventil (28) im Primärkreis (18) mit einer Rücklaufleitung (20) versehen ist, das Vorrangventil (44) an seiner der Signalleitung (48) abgelegenen Seite über eine Pilotleitung (53) mit der Zuführleitung (16) verbunden ist und eine weitere Leitung (22) das Vorrangventil (44) mit dem Sekundärkreis (24) verbindet, dadurch gekennzeichnet, daß der Sekundärkreis ein Stellventil (38) aufweist, das in seiner Neutralstellung die weitere Leitung (22) über eine vierte Leitung (26) mit der Rücklaufleitung (20) verbindet.

### Claims

1. A hydraulic system (10) comprising a constant-delivery pump (12) which communicates by way of a priority valve (44) with a primary circuit (18) and a secondary circuit (24), wherein the primary circuit (18) has a valve (28) for controlling the feed flow to a privileged load (34), provided between the priority valve (44) and the valve (28) are both a feed conduit (16) and also a signal conduit (48), the priority valve (44) is adjustable in dependence on the pressure in the signal conduit (44) and wherein the feed conduit (16) and the signal cohduit (48) are connected to the pressure side of the privileged load (34), when the valve (28) is displaced out of its neutral position, characterised in that the signal conduit (48) can be blocked as soon as the pressure obtaining therein is greater than the pressure supplied by way of the feed conduit (16) to the load (34).

2. A hydraulic system according to claim 1 comprising a control valve (54) in the signal conduit (48), wherein the hydraulic system is in the form of an open system, characterised in that the control valve (54) can be set by way of the pressure in the feed conduit (16) and, at a pressure in the signal conduit (48) which is greater than the pressure in the feed conduit, can be set into a first limit position in which the communication of the signal line (48) between the priority valve (44) and the valve (28) is interrupted.

3. A hydraulic system (10) according to claim 2 wherein a check valve (60) is provided in the feed conduit (16), characterised in that in its first limit position the control valve (54) connects the portion of the feed conduit (16) between the check valve (60) and the priority valve (44) to the portion of the signal conduit (48) between the control valve (54) and the priority valve (44).

4. A hydraulic system according to one or more of the preceding claims wherein the valve (28) in the primary circuit (18) is provided with a return conduit (20), the priority valve (44), at its side remote from the signal conduit (48), is connected to the feed conduit (16) by way of a pilot conduit (53), and a further conduit (22) ccnnects the priority valve (44) to the secondary circuit (24), characterised in that the secondary circuit has a regulating valve (38) which in its neutral position communicates the further conduit (22) with the return conduit (20) by way of a fourth conduit (26).

### Revendications

1. Système hydraulique (10) comportant une pompe (12) à débit constant qui est en communication, par l'intermédiaire d'une valve prioritaire (44), avec un circuit primaire (18) et un circuit secondaire (24), le circuit primaire (18) comportant une valve (28) commandant l'écoulement en direction d'un appareil utilisateur (34) de rang prioritaire, un conduit d'alimentation (16), ainsi qu'un conduit de signaux (48), étant prévus entre la valve prioritaire (44) et la valve (28), la valve prioritaire (44) étant déplaçable en fonction de la pression régnant dans le conduit de signaux (48) et le conduit d'alimentation (16) et le conduit de signaux (48) étant, lorsque la valve (28) est écartée de sa position neutre, reliés au côté haute pression de l'appareil utilisateur prioritaire (34), caractérisé en ce que le conduit de signaux (48) peut être bloqué, dès que la pression qui y régne est supérieure à la pression fournie à l'appareil utilisateur (34) par l'intermédiaire du conduit d'alimentation (16).

2. Système hydraulique selon la revendication 1, comportant une valve de commande (54) montée dans le conduit de signaux (48), le système hydraulique se présentant sous la forme d'un système ouvert, caractérisé en ce que la valve de commande (54) est déplaçable par l'intermédiaire de la pression régnant dans le conduit d'alimentation (16) et peut être déplacée, pour une pression dans le conduit de signaux (48) supérieure à la pression dans le conduit d'alimentation, jusque dans une première position extrême dans laquelle la communication du conduit de signaux (48) entre la valve prioritaire (44) et la valve (28) est interrompue.

3. Système hydraulique (10) selon la revendication 2, une valve de retenue (60) étant prévue dans le conduit d'alimentation (16), caractérisé en ce que la valve de commande (54) relie, dans sa première position extrême la section du conduit d'alimentation (16) comprise entre la valve de retenue (60) et la valve prioritaire (44) à la section du conduit de signaux (48) comprise entre la valve de commande (54) et la valve prioritaire (44).

4. Système hydraulique selon une ou plusieurs des revendications précédentes, la valve (28) montée dans le circuit primaire (18) comportant un conduit de retour (20), la valve prioritaire (44) étant reliée au conduit d'alimentation (16) de son côté opposé au conduit de signaux (48) par l'intermédiaire d'un conduit-pilote (53), et un autre conduit (22) reliant la valve prioritaire (44) au circuit secondaire (24), caractérisé en ce que le circuit secondaire comporte une valve de réglage (38) qui, dans sa position neutre, relie l'autre conduit (22) au conduit de retour (20) par l'intermédiaire d'un quatrième conduit (26).